# EUROPÄISCHE PATENTSCHRIFT

(11) **EP 2 739 876 B1**
(45) Veröffentlichungstag und Bekanntmachung des Hinweises auf die Patenterteilung: **14.09.2016**
(21) Anmeldenummer: 12740056.2
(22) Anmeldetag: 23.07.2012
(51) Int. Cl.: F16F 1/12

(54) **FEDERSYSTEM FÜR EIN LUFTFAHRZEUG**
SPRING SYSTEM FOR AN AIRCRAFT
SYSTÈME D'AMORTISSEMENT POUR AÉRONEF

(30) Priorität: 28.07.2011 DE 102011108852
(43) Veröffentlichungstag der Anmeldung: 11.06.2014
(73) Patentinhaber: Liebherr-Aerospace Lindenberg GmbH, 88161 Lindenberg/Allgäu (DE)
(72) Erfinder: KAST, Viktor, 88400 Biberach (DE)
(74) Vertreter: Laufhütte, Dieter
(86) Internationale Anmeldenummer: PCT/EP2012/003097
(87) Internationale Veröffentlichungsnummer: WO 2013/013804

(56) Entgegenhaltungen:
- WO-A2-2011/106260
- FR-A- 1 249 465
- FR-A1- 2 318 349
- US-A- 2 661 206
- US-A- 2 697 600

## Beschreibung

Die vorliegende Erfindung betrifft ein Federsystem für ein Luftfahrzeug, ein Fahrwerk für ein Luftfahrzeug mit wenigstens einem Federsystem sowie ein Luftfahrzeug, insbesondere Flugzeug.

Bei Federsystemen für Luftfahrzeuge, insbesondere Federsystemen für Fahrwerke von Luftfahrzeugen, ist üblicherweise eine Zugfeder auf einem Federaufnahmemittel aufgespannt. Dieses Federaufnahmemittel weist dabei einen Ösenkopf bzw. eine Hülse auf, auf der ein Gewinde mit einer konstanten Gewindesteigung, die ungefähr der Federsteigung im entlasteten bzw. ungespannten Zustand entspricht, aufgeschraubt wird.

Da die Feder am Anfang des Gewindes durch den Spannvorgang der Feder in der Steigung stark verändert wird, neigt die Feder dazu, vom ersten Gewindegang des Gewindes zu springen oder sich sogar plastisch zu verformen. Es kann dabei beispielsweise zu einer bleibenden Spalt- bzw. Knickbildung der Feder kommen.

Weitere Lösungsansätze unter Verwendung von sogenannten Vorzylindern, bestimmten Materialpaarungen wie rostfreiem Stahl und Titan haben sich als nachteilig erwiesen, weil diese Konstruktionen stark fressanfällig waren. Denn hier schabt beispielsweise der Innendurchmesser der Titanfeder auf dem Vorzylinder und auf dem letzten Gewindegang des Ösenkopfes aus rostfreiem Stahl.

Auch wurde versucht, durch Klebeverbindungen das Springen der Feder oder Verformungen der Feder zu verhindern. Diese Lösungsansätze weisen aber den Nachteil auf, dass die Dauerfestigkeit bzw. Standfestigkeit der Feder nicht hoch ist.

Die Dokumente FR 2 318 349 A1, US 2 661 206 A, US 2 697 600 A und FR 1 249 465 A offenbaren Federsystemen mit den Merkmalen des Oberbegriffs des Anspruchs 1, geeignet für ein Luftfahrzeug.

Es ist daher die Aufgabe der vorliegenden Erfindung, ein Federsystem der eingangs genanten Art in vorteilhafter Weise weiterzubilden, insbesondere dahingehend, dass die Standzeit eines Federsystems erhöht und eine sichere Befestigung der Feder des Federsystems ermöglicht wird.

Diese Aufgabe wird erfindungsgemäß gelöst durch ein Federsystem mit den Merkmalen des Anspruchs 1. Danach ist vorgesehen, dass ein Federsystem für ein Luftfahrzeug mit wenigstens einer Feder und mit wenigstens einem Federaufnahmemittel versehen ist, wobei das Federaufnahmemittel wenigstens einen Ösenkopf aufweist, an dem die Feder befestigbar oder befestigt ist, wobei der Ösenkopf ein Gewinde aufweist, auf das die Feder aufschraubbar oder aufgeschraubt ist, wobei das Gewinde wenigstens einen Gewindeabschnitt aufweist, der eine Gewindesteigung im Bereich der Betriebssteigung der Feder aufweist, und das Gewinde zumindest teilweise eine variable Steigung aufweist. Durch variable Steigung wird der Vorteil erzielt, dass die Federverformung und Federkraft langsam in der Einspannstelle aufgebaut wird. Die Neigung zum Springen der Feder wird hierdurch deutlich verringert.

Das Luftfahrzeug kann insbesondere ein Flugzeug sein und das Federsystem kann insbesondere ein Federsystem eines Fahrwerkes eines Luftfahrzeuges sein. Die Feder kann insbesondere eine Zugfeder, also eine auf Zug belastete Feder sein.

Die Betriebssteigung der Feder entspricht dabei insbesondere der Steigung der Feder, die im Betrieb der Feder erreicht wird, also die Steigung der Feder im belasteten Zustand. Diese Steigung der Feder wird dabei durch die Elongation der Feder auf eine bestimmte Länge bzw. einen bestimmten Längenbereich, auf die bzw. auf den die Feder im Betrieb gedehnt bzw. ausgelenkt wird, bestimmt.

Dadurch ergibt sich insbesondere der Vorteil, dass eine Reduzierung der Verformungen und der Kräfte am Übergang von dem Einspannbereich der Feder, der am Federaufnahmemittel befestigt ist, und dem federnden Bereich der Feder erreicht wird. Vorteilhafterweise werden die Federverformung und die Federkraft langsam aufgebaut. Insbesondere wird hierdurch erreicht, dass die Feder nicht mehr zum sogenannten Springen neigt, d. h. in Folge der Belastung aus dem Gewinde herausspringt, denn die Kräfte, die das Springen bewirken, werden von vorneherein sehr einfach und sehr effektiv minimiert. Insbesondere kann die Feder nun nicht mehr vom ersten Gewindegang des Ösenkopfes springen, da die Verformung in diesem Bereich stark reduziert ist.

Es ist möglich, einen kürzen Ösenkopf einzusetzen, da nunmehr die zu übertragenden Kräfte reduziert werden können bzw. reduziert sind. Durch den Einsatz eines kürzeren Ösenkopfes kann vorteilhafterweise Gewicht und Material eingespart werden. Außerdem ergibt sich der Vorteil, dass der Steifigkeitssprung am Ende des Gewindes stark reduziert werden kann. Es erfolgt zudem vorteilhafterweise kein Scheuern mehr am Vorzylinder bzw. an dem Federaufnahmemittel und auch ein Scheuern zwischen ersten Gewindegang und der Feder ist deutlich reduziert. Die Dauerfestigkeit der Feder kann vorteilhafterweise deutlich erhöht werden.

Die Feder kann eine Titanfeder sein. Ferner kann vorgesehen sein, dass das Federaufnahmemittel aus rostfreiem Stahl ausgeführt ist.

Des Weiteren kann vorgesehen sein, dass das Gewinde zumindest teilweise eine konstante Steigung aufweist.

Darüber hinaus kann vorgesehen sein, dass wenigstens ein weiterer bzw. zweiter Gewindeabschnitt mit einer ersten konstanten Steigung vorgesehen ist.

Des Weiteren ist denkbar, dass ein weiterer bzw. dritter Gewindeabschnitt mit einer bzw. einer ersten variablen Steigung vorgesehen ist.

Es ist möglich, dass ein weiterer bzw. vierter Gewindeabschnitt mit einer bzw. einer zweiten variablen Steigung vorgesehen ist.

Darüber hinaus kann vorgesehen sein, dass das Gewinde ein Außengewinde oder ein Innengewinde ist und/oder dass das Gewinde ein Rundgewinde oder ein konisches Gewinde oder ein Rechteckgewinde oder ein trapezförmiges Gewinde ist.

Außerdem betrifft die vorliegende Erfindung ein Fahrwerk mit den Merkmalen des Anspruchs 9. Danach ist vorgesehen, dass ein Fahrwerk für ein Luftfahrzeug mit wenigstens einem Federsystem nach einem der Ansprüche 1 bis 8 versehen ist.

Des Weiteren betrifft die vorliegende Erfindung ein Luftfahrzeug mit den Merkmalen des Anspruchs 10. Danach ist vorgesehen, dass ein Luftfahrzeug, insbesondere Flugzeug, mit wenigstens einem Federsystem nach einem der Ansprüche 1 bis 8 und/oder mit wenigstens einem Fahrwerk nach Anspruch 9 versehen ist.

Weitere Einzelheiten und Vorteile der Erfindung sollen nun anhand eines in der Zeichnung dargestellten Ausführungsbeispiels näher erläutert werden.

Es zeigen:
- Figur 1:: eine Draufsicht auf das erfindungsgemäße Federsystem im belasteten Zustand;
- Figur 2:: eine Draufsicht auf das erfindungsgemäße Federsystem im teilbelasteten Zustand;
- Figur 3:: eine Draufsicht auf das erfindungsgemäße Federsystem im entlasteten Zustand;
- Figur 4:: eine Schnittzeichnung auf das in Figur 3 dargestellte Federsystem;
- Figur 5:: eine Detailzeichnung auf ein Fahrwerk eines Luftfahrzeuges im ausgefahrenen Zustand; und
- Figur 6:: eine Detailzeichnung auf ein Fahrwerk eines Luftfahrzeuges im eingefahrenen Zustand.

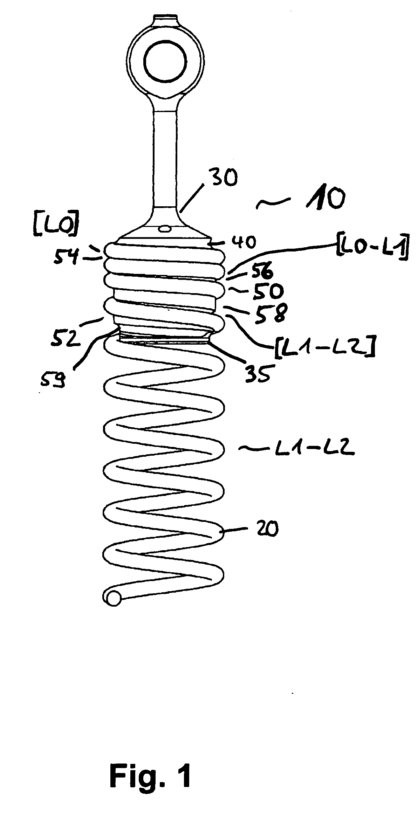

Figur 1 zeigt eine Draufsicht auf das erfindungsgemäße Federsystem 10 im belasteten Zustand, hier eine Auslenkung der Feder 20 auf eine Länge im Bereich L1-L2.

In den Figuren wird die Federsteigung derart angegeben, dass die Federsteigung im bezeichneten Bereich anhand der für diese Federsteigung entsprechenden Länge der Feder bei entsprechender Auslenkung in eckige Klammern gesetzt angegeben wird.

Das wesentlich neue und vorteilhafte des erfindungsgemäßen Federsystems liegt darin begründet, dass nunmehr eine Reduzierung der Verformungen und Kräfte am Übergang von dem befestigten zu dem federnden Bereich der Feder 20 ermöglicht ist. Dies wird insbesondere durch die Befestigung der Feder 20 am Gewinde 50 mit einer variablen Steigung erreicht. Hierdurch werden die Federverformung und -kraft langsam in der Einspannstelle aufgebaut.

Die Gewindesteigung des Gewindes 50 steigt kontinuierlich vom Gewindeabschnitt 54 mit einer ersten konstanten Federsteigung [L0] am Kopf in Richtung der Feder 20 an. Die Steigung des Gewindes 50 am Ende beträgt in etwa die Steigung der Feder bei [L1] oder liegt vorteilhafterweise bei einer Federsteigung zwischen [L1-L2].

Hierdurch ist die Feder 20 am Übergang von dem befestigten zu dem federnden Bereich auf die im Betrieb auftretenden Werte vorgespannt und bereits verformt.

Das Gewinde 50 ist dabei auf dem Ösenkopf 40 angeordnet, insbesondere eingeschnitten bzw. eingefräst, wobei der Ösenkopf 40 einen Teil des Federaufnahmemittels 30 ist. Das Federaufnahmemittel 30 weist dabei auch einen Zylinderabschnitt 35 auf, über den die Feder 20 aufgeschoben werden kann. Der Zylinderabschnitt kann auch derart ausgeführt sein, dass er auch die Feder 20 von innen stabilisiert, insbesondere dann, wenn der Zylinderabschnitt mit einer größeren Länge als im Ausführungsbeispiel ausgeführt wird.

Das Gewinde 50 ist in unterschiedliche Abschnitte aufgeteilt, nämlich in den Gewindeabschnitt 52, der eine Gewindesteigung [L1-L2] im Bereich der Betriebssteigung der Feder 20 aufweist. Ferner sind im Gewindeabschnitt 54 zwei Gewindegänge mit einer konstanten Steigung [L0] vorgesehen, im Gewindeabschnitt 56 ein Gewindegang mit einer variablen Steigung von [L0-L1] sowie ein weiterer Gewindeabschnitt 58 mit einer variablen Steigung von [L1-L2].

Die Abschnitte 52 und 58 überlappen sich im hier gezeigten Ausführungsbeispiel, was jedoch nicht zwingend erforderlich ist.

Die Gewindenut 59 im Gewindeabschnitt 58 kann breiter gemacht bzw. gezeilt werden. Hierdurch wird die Montierbarkeit der Feder 20 erleichtert und die Feder 20 wird auf der zur Öse abgewandten Flanke des ersten Gewindeganges bei Veränderung der Länge (L1 auf L2 oder umgekehrt) kontrolliert abgerollt. Spannungs- und Verformungsspitzen sind hierdurch ausgeschlossen.

Grundsätzlich ist es auch denkbar, dass das Gewinde oder einzelne Gewindeabschnitte konisch gestaltet oder tiefer gesetzt werden. Die Gewindeform kann dabei rund sein oder auch andere beliebige Formen, wie z. B. rechteckige Formen oder trapezartige Formen aufweisen. Auch durch Gewinde mit konstanter Steigung, die im Bereich von der Betriebssteigung [L1-L2] liegt, können die gestellten Ansprüche an ein Federsystem erfüllt werden. Grundsätzlich ist es auch möglich, dass das Gewinde 20 auch als Innengewinde ausgeführt wird. Zur Sicherung der Befestigung der Feder 20 am Ösenkopf 40 können Klebstoffe und/oder weitere Elemente wie z. B. eine Schrumpfhülse verwendet werden.

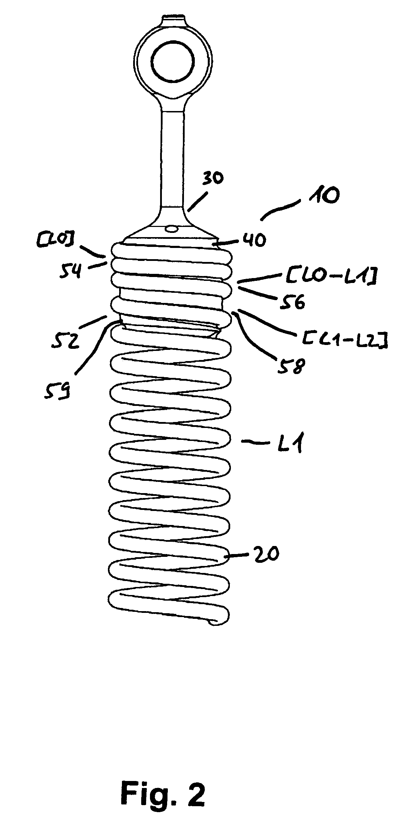

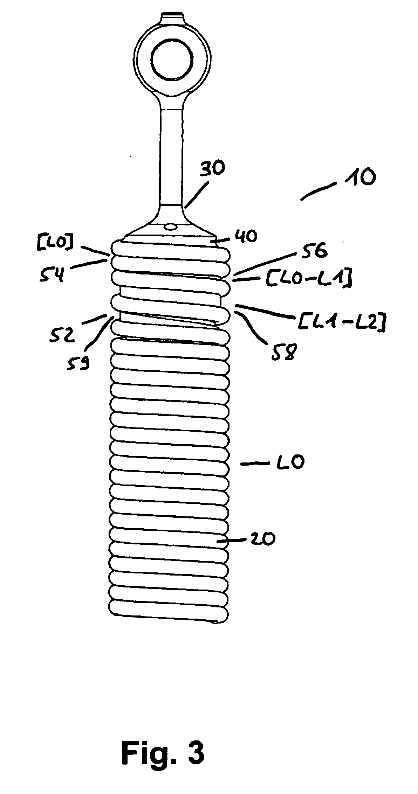

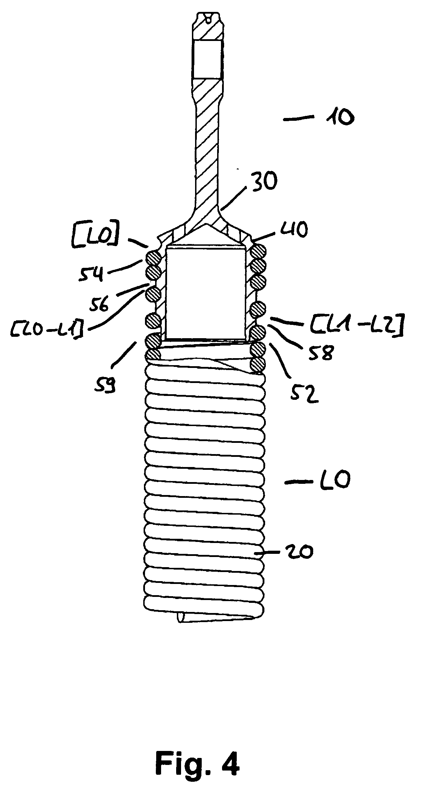

In den Figuren 2 und 3 ist eine weitere Draufsicht auf das erfindungsgemäße Federsystem 10 im teilbelasteten Zustand (vgl. Figur 2) mit einer Auslenkung auf eine Länge L1 bzw. im teilentlasteten Zustand (vgl. Figur 3) mit einer Auslenkung auf eine Länge L0 zu sehen. Figur 4 zeigt eine Schnittzeichnung auf das in Figur 3 dargestellte Federsystem 10.

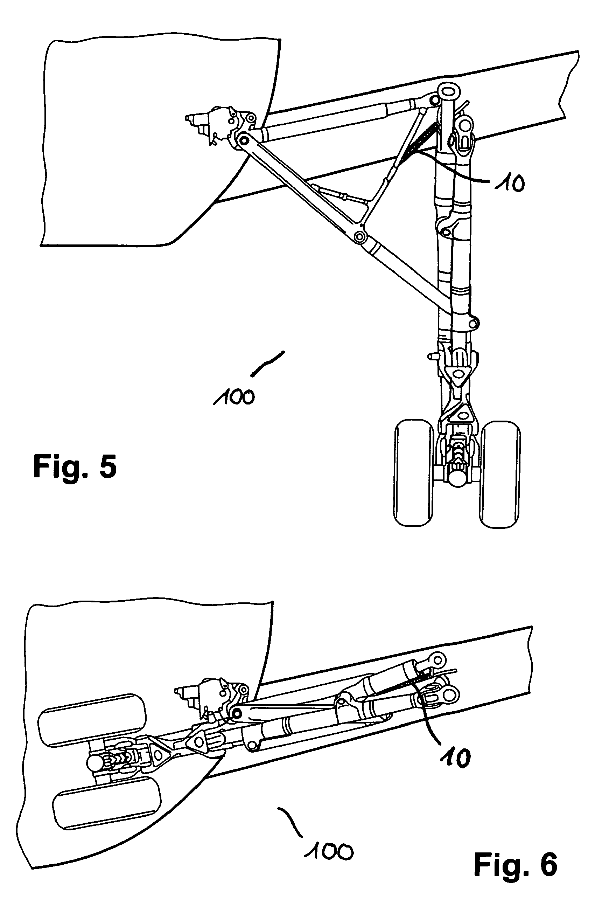

Figur 5 zeigt eine Detailzeichnung eines Fahrwerks eines Luftfahrzeugs im ausgefahrenen Zustand. Das Fahrwerk 100 des Flugzeuges weist dabei ein Federsystem 10 auf. Figur 6 zeigt das in Figur 5 gezeigte Fahrwerk 100 des Flugzeuges im eingefahrenen Zustand.

## Patentansprüche

1. Federsystem (10) für ein Luftfahrzeug mit wenigstens einer Feder (20) und mit wenigstens einem Federaufnahmemittel (30), wobei das Federaufnahmemittel (30) wenigstens einen Ösenkopf (40) aufweist, an dem die Feder (20) befestigbar oder befestigt ist, wobei der Ösenkopf (40) ein Gewinde (50) aufweist, auf das die Feder (20) aufschraubbar oder aufgeschraubt ist, und wobei das Gewinde (50) wenigstens einen Gewindeabschnitt (52) aufweist, der eine Gewindesteigung ([L1-L2]) im Bereich der Betriebssteigung der Feder (20) aufweist, **dadurch gekennzeichnet, dass** das Gewinde (50) zumindest teilweise eine variable Steigung aufweist.

2. Federsystem (10) nach Anspruch 1, **dadurch gekennzeichnet, dass** das Gewinde (50) zumindest teilweise eine konstante Steigung aufweist.

3. Federsystem (10) nach Anspruch 1 oder 2, **dadurch gekennzeichnet, dass** wenigstens ein weiterer bzw. zweiter Gewindeabschnitt (54) mit einer ersten konstanten Steigung ([L0]) vorgesehen ist.

4. Federsystem (10) nach Anspruch 3, **dadurch gekennzeichnet, dass** ein weiterer bzw. dritter Gewindeabschnitt (56) mit einer bzw. einer ersten variablen Steigung ([L0-L1]) vorgesehen ist.

5. Federsystem (10) nach Anspruch 3 oder 4, **dadurch gekennzeichnet, dass** ein weiterer bzw. vierter Gewindeabschnitt (58) mit einer bzw. einer zweiten variablen Steigung ([L1-L2]) vorgesehen ist.

6. Federsystem (10) nach einem der vorhergehenden Ansprüche, **dadurch gekennzeichnet, dass** das Gewinde (50) ein Außengewinde oder ein Innengewinde ist und/oder dass das Gewinde (50) ein Rundgewinde oder ein konisches Gewinde oder ein Rechteckgewinde oder ein trapezförmiges Gewinde ist.

7. Fahrwerk (100) für ein Luftfahrzeug mit wenigstens einem Federsystem (10) nach einem der Ansprüche 1 bis 6.

8. Luftfahrzeug, insbesondere Flugzeug, mit wenigstens einem Federsystem (10) nach einem der Ansprüche 1 bis 6 und/oder mit wenigstens einem Fahrwerk (100) nach Anspruch 7.

## Claims

1. A spring system (10) for an aircraft with at least one spring (20) and with at least one spring receiving means (30), wherein the spring receiving means (30) includes at least one lug head (40) to which the spring (20) is attachable or attached, wherein the lug head (40) includes a thread (50) onto which the spring (20) can be screwed or is screwed, and wherein the thread (50) includes at least one thread portion (52) which has a thread pitch ([L1-L2]) in the region of the operating pitch of the spring (20), **characterized in that** the thread (50) at least partly has a variable pitch.

2. The spring system (10) according to claim 1, **characterized in that** the thread (50) at least partly has a constant pitch.

3. The spring system (10) according to claim 1 or 2, **characterized in that** there is provided at least one further or second thread portion (54) with a first constant pitch ([L0]).

4. The spring system (10) according to claim 3, **characterized in that** there is provided a further or third thread portion (56) with a or a first variable pitch ([L0-L1]).

5. The spring system (10) according to claim 3 or 4, **characterized in that** there is provided a further or fourth thread portion (58) with a or a second variable pitch ([L1-L2]).

6. The spring system (10) according to any of the preceding claims, **characterized in that** the thread (50) is an external thread or an internal thread and/or that the thread (50) is a round thread or a conical thread or a rectangular thread or a trapezoidal thread.

7. A traveling gear (100) for an aircraft with at least one spring system (10) according to any of claims 1 to 6.

8. An aircraft, in particular airplane, with at least one spring system (10) according to any of claims 1 to 6 and/or with at least one traveling gear (100) according to claim 7.

## Revendications

1. Système à ressort (10) pour un aéronef, comportant au moins un ressort (20) et comportant au moins un moyen de réception de ressort (30), le moyen de réception de ressort (30) présentant au moins une tête d'oeillet (40) sur laquelle le ressort (20) peut être fixé ou est fixé, la tête d'oeillet (40) présentant un filetage (50) sur lequel le ressort (20) peut être vissé ou est vissé, et le filetage (50) présentant au moins un tronçon de filetage (52) qui présente un pas de filetage ([L1-L2[) dans la zone du pas opérationnel du ressort (20), **caractérisé en ce que** le filetage (50) présente au moins partiellement un pas variable.

2. Système à ressort (10) selon la revendication 1, **caractérisé en ce que** le filetage (50) présente au moins partiellement un pas constant.

3. Système à ressort (10) selon la revendication 1 ou 2, **caractérisé en ce qu'**au moins un autre ou deuxième tronçon de filetage (54), respectivement, est prévu avec un premier pas constant ([L0]).

4. Système à ressort (10) selon la revendication 3, **caractérisé en ce qu'**un autre ou troisième tronçon de filetage (56), respectivement, est prévu avec un ou un premier pas variable ([L0-L1]) respectivement.

5. Système à ressort (10) selon la revendication 3 ou 4, **caractérisé en ce qu'**un autre ou quatrième tronçon de filetage (58), respectivement, est prévu avec un ou un deuxième pas variable ([L1-L2]) respectivement.

6. Système à ressort (10) selon l'une des revendications précédentes, **caractérisé en ce que** le filetage (50) est un filetage externe ou un taraudage et/ou en ce que le filetage (50) est un filetage rond ou un filetage conique ou un filetage rectangulaire ou un filetage trapézoïdal.

7. Train d'atterrissage (100) pour un aéronef, comportant au moins un système à ressort (10) selon l'une des revendications 1 à 6.

8. Aéronef, en particulier avion, comportant au moins un système à ressort (10) selon l'une des revendications 1 à 6 et/ou comportant au moins un train d'atterrissage (100) selon la revendication 7.
